# EUROPÄISCHE PATENTSCHRIFT

(11) **EP 1 728 049 B1**
(45) Veröffentlichungstag und Bekanntmachung des Hinweises auf die Patenterteilung: **26.08.2015**
(21) Anmeldenummer: 05717118.3
(22) Anmeldetag: 21.03.2005
(51) Int. Cl.: G01M 3/28, G01K 13/02, G01D 11/24

(54) **SICHERHEITSMODUL UND MESSANORDNUNG MIT SICHERHEITSMODUL**
SECURITY MODULE AND MEASURING DEVICE PROVIDED THEREWITH
MODULE DE SECURITE ET DISPOSITIF DE MESURE DOTE D'UN TEL MODULE DE SECURITE

(30) Priorität: 23.03.2004 DE 102004014600
(43) Veröffentlichungstag der Anmeldung: 06.12.2006
(73) Patentinhaber: Endress + Hauser GmbH + Co. KG, 79689 Maulburg (DE)
(72) Erfinder: RENK, Peter, 79539 Lörrach (DE); KLOTZ-ENGMANN, Gerold, 79689 Maulburg (DE); HÜGEL, Michael, 79541 Lörrach (DE)
(74) Vertreter: Andres, Angelika Maria
(86) Internationale Anmeldenummer: PCT/EP2005/051306
(87) Internationale Veröffentlichungsnummer: WO 2005/093375

(56) Entgegenhaltungen:
- EP-A- 1 507 133
- WO-A-96/10730
- DE-A1- 10 124 678
- DE-A1- 19 747 273
- US-A- 4 958 938
- US-A- 5 907 112
- "ANSI/ISA-12.27.01-2003: Requirements for process sealing...." 2. Februar 2003 (2003-02-02), ISA , XP001207445 in der Anmeldung erwähnt Seiten 9-11

## Beschreibung

Die vorliegende Erfindung betrifft ein Sicherheitsmodul, insbesondere ein Sicherheitsmodul für Messumformer, sowie Messanordnungen, die ein solches Sicherheitsmodul aufweisen.

Das U.S. Patent Nr. 4,958,938 offenbart in der Diskussion seines Stands der Technik einen Temperatursensor, der an ein Messumformergehäuse angeschlossen ist, und dessen Primärsignal nach einer Verarbeitung in eine Wandlerschaltung aus dem Umformergehäuse hinaus in eine verrohrte Signalleitung eingeleitet wird. Zum Schutz vor Kontaminationen aus dem Prozess ist die verrohrte Signalleitung vergossen und enthält am umformerseitigen Ende eine Drainagedichtung, um insbesondere Kondenswasser aus dem Umformergehäuse abzulassen.

Messumformer werden häufig zur Überwachung eines Prozessparameters eines Mediums eingesetzt. Prozessparameter sind beispielsweise aber nicht nur Druck, Füllstand, Durchfluss, pH-Wert, Temperatur. Die gattungsgemäßen Messumformer weisen die folgenden Merkmale auf:

einen Sensor zum Erfassen einer Messgröße eines Mediums, wobei der Sensor ein von der Messgröße abhängiges Primärsignal ausgibt;

ein Umformergehäuse, welches in seinem Inneren mindestens eine Kammer definiert, und welches eine medienseitige erste Öffnung und eine zweite Öffnung aufweist;

eine elektronischen Schaltung, welche in der mindestens einen Kammer angeordnet ist, wobei die Schaltung das Primärsignal des Sensors verarbeitet und ein Ausgangssignal erzeugt, welches über einen Signalpfad ausgegeben wird, der durch die zweite Öffnung verläuft.

Durch die medienseitige erste Öffnung kann der Sensor die Messgröße erfassen, sofern der Sensor im Umformergehäuse angeordnet ist, oder das Primärsignal kann durch die medienseitige erste Öffnung in das Umformergehäuse geleitet werden, wenn der Sensor außerhalb des Umformergehäuses angeordnet ist. Im Bereich der ersten Öffnung ist gewöhnlich eine Dichtung vorgesehen, welche die mindestens eine Kammer von dem Eindringen des Mediums schützt.

Bei Ausfall der Dichtung könnte jedoch ein Kontaminationspfad freigegeben geben, der sich von der ersten Öffnung zur zweiten Öffnung erstreckt und durch die mindestens eine Kammer verläuft. Von der zweiten Öffnung könnte dann das Medium in die Umwelt oder, sofern eine Verrohrung, beispielsweise ein Rohrleitungssystem im Sinne eines Conduit System nach dem NEC 501-4, des weiteren Signalpfades gegeben ist, auch in einen Kontrollraum bzw. Messwarte gelangen. Diesem Problem trägt der amerikanische Standard ANSI/ISA-12.27.01-2003 mit dem Titel "Requirements for Process Sealing Between Electrical Systems and Flammable and Combustible Process Fluids" Rechnung, der verlangt dass erstens eine zweite Dichtung vorgesehen ist, welche den Kontaminationspfad unterbricht, und dass außerdem Mittel vorgesehen sind, welche den Kontaminationspfad zwischen der ersten und der zweiten Dichtung überwachen, um den Ausfall der ersten Dichtung nachzuweisen.

Bei Neuentwicklungen von Messumformern kann dieser Standard zur Verbesserung der Anlagensicherheit berücksichtigt werden. Dieser Weg bleibt jedoch bei der installierten Basis von Messumformern oder bei serienfreien Geräten versagt. Der vorliegenden Erfindung liegt daher die Aufgabe zugrunde, die Sicherheit von herkömmlichen Messumformern zu verbessern. Die Aufgabe wird erfindungsgemäß gelöst durch die Messanordnung gemäß des unabhängigen Patentanspruchs 1.

Die erfindungsgemäße Messanordnung umfasst:
einen Messumformer mit
einem Sensor zum Erfassen einer Messgröße eines Mediums, wobei der Sensor ein von der Messgröße abhängiges Primärsignal ausgibt;
einem Umformergehäuse, welches in seinem Inneren mindestens eine Kammer definiert, und welches eine medienseitige erste Öffnung und eine zweite Öffnung aufweist, wobei sich von der ersten Öffnung zur zweiten Öffnung ein erster Abschnitt eines Kontaminationspfads erstreckt, der durch die mindestens eine Kammer verläuft;
einer ersten Dichtung, welche den ersten Abschnitt des Kontaminationspfads unterbricht;
einer elektronischen Schaltung, welche in der mindestens einen Kammer angeordnet ist, wobei die Schaltung das Primärsignal des Sensors verarbeitet und ein Ausgangssignal erzeugt, welches über einen ersten Abschnitt eines Signalpfads ausgegeben wird, der durch die zweite Öffnung verläuft; wobei
die Messanordnung weiterhin ein Sicherheitsmodul aufweist, mit
einem Modulgehäuse, welches in seinem Inneren mindestens eine Modulkammer definiert, und welches eine umformerseitige erste Modulöffnung und eine zweite Modulöffnung aufweist, wobei sich von der ersten Modulöffnung ein zweiter Abschnitt des Kontaminationspfads zumindest bis in die mindestens eine Modulkammer erstreckt;
mindestens einer zweiten Dichtung, welche den zweiten Abschnitt des Kontaminationspfads unterbricht; und
einem zweiten Abschnitt des Signalpfads; wobei
das Modulgehäuse derart mit dem Umformergehäuse verbindbar ist, dass der zweite Abschnitt des Kontaminationspfads an den ersten Abschnitt des Kontaminationspfads anschließt; und der zweite Abschnitt des Signalpfads an den ersten Abschnitt des Signalpfads anschließbar ist, um das Ausgangssignal vom ersten Abschnitt des Signalpfads weiter zu leiten; und
einen Leckdetektor, welcher einen Teil des Kontaminationspfads überwacht der zwischen der ersten Dichtung und der zweiten Dichtung angeordnet ist, wobei der Leckdetektor bei Auftreten eines Lecks den Signalpegal des Ausgangssignals verändert.

Der Kontaminationspfad, bezeichnet allgemein einen Pfad, über den ein Medium sich ausbreiten kann, wenn dies nicht durch die genannten Dichtungen und ggf. weitere Dichtungen verhindert wird.Der Begriff Dichtung ist weit zu interpretieren.

Die erste medienseitige Dichtung im Sinne der Erfindung kann jede beliebige Barriere in dem Kontaminationspfad sein, wobei der durch die Dichtung vor dem Medium geschützte folgende Abschnitt des Kontaminationspfades durch den Leckdetektor überwacht wird. Insoweit kann die erste Dichtung eine Dichtung sein, welche beim Einsatz des Messumformers bestimmungsgemäß permanent dem Medium ausgesetzt ist, eine solche Dichtung kann beispielsweise ringförmig oder membranförmig im Bereich der ersten Öffnung angeordnet sein. Andererseits kann die erste medienseitige Dichtung im Sinne der Erfindung auch eine nachgeordnete Dichtung sein, die erst dann mit dem Medium in Berührung kommt, wenn vorgelagerte Dichtungen ausgefallen sind. Eine solche Dichtung kann beispielsweise eine Abdichtung einer elektrischen Durchführung sein, wie sie in einer Zwischenwand oder bei einem Modular aufgebauten Messumformer zwischen verschiedenen Modulen vorkommen kann. Beispielsweise kann in dem Inneren des Umformergehäuses eine Zwischenwand vorgesehen sein, so dass das Umformergehäuse im Inneren eine erste Kammer und eine zweite Kammer aufweist, wobei die erste Kammer beispielsweise als Elektronikraum dient, und die zweite Kammer als so genannter Anschlussraum. In diesem Falle ist gewöhnlich die Schaltung zur Auswertung der Primärsignale in dem Elektronikraum angeordnet, wobei der Signalpfad über elektrische Durchführungen durch die Zwischenwand in den Anschlussraum geführt ist. Die Befestigungen, der elektrischen Durchführungen in der Zwischenwand können bei entsprechender Ausgestaltung als Dichtungen dienen, welche den Kontaminationspfad zwischen der dem Elektronikraum und dem Anschlussraum sperren.

Der Signalpfad im Sinne der Erfindung bezeichnet den Übertragungsweg von Signalen zwischen dem Messumformer und einer bestimmungsgemäß daran angeschlossenen Übertragungsleitung. Der Signalpfad ist im Inneren des Messumformers zumindest abschnittsweise durch eine Folge von elektrischen Schaltungen, Kabeln und elektrischen Durchführungen definiert. Der Kontaminationspfad verläuft zumindest abschnittsweise parallel zum Signalpfad oder an diesem entlang, denn die elektrischen Durchführungen erfordern Gehäusedurchbrüche die abzudichten sind. Bei Versagen der Dichtmaßnahmen kann ein Medium die Durchbrüche passieren.

Die erste Dichtung ist vorzugsweise so bemessen dass sie den "Primary seal leakage test" gemäß Abschnitt 6.3.1. und den "Primary seal burst pressure test" gemäß Abschnitt 6.3.2 des ANSI/ISA-12.27.01-2003 besteht.

Die zweite Dichtung ist vorzugsweise so bemessen, dass sie den "Secondary seal leakage" Test gemäß des Abschnitts, 6.3.5. des ANSI/ISA-12.27.01-2003 besteht. D.h. die zweite Dichtung soll vorzugsweise einem Testdruck, der dem 1,5-fachen Entlüftungsdruck (Venting Pressure) gemäß des Abschnitts, 6.3.3. des ANSI/ ISA-12.27.01-2003 entspricht, standhalten, der auftreten würde wenn das Sicherheitsmodul das Modulgehäuse erfindungsgemäß mit dem Umformergehäuse verbunden ist.

Die vorgeschriebenen Testdrücke hängen von den zugelassenen maximalen Arbeitsdrücken der Messumformer ab und sind genauer in den genannten Abschnitten des ANSI/ISA-12.27.01-2003 spezifiziert.

Das Modulgehäuse wird vorzugsweise druckdicht mit dem Umformergehäuse verbunden, wobei die erste Modulöffnung mit der zweiten Öffnung des Umformergehäuses kommuniziert. Vorzugsweise fluchten die beiden Öffnungen miteinander. In einer derzeit bevorzugten Ausgestaltung weisen das Umformergehäuse und das Modulgehäuse im Bereich dieser Öffnungen zueinander komplementäre Gewinde auf, so dass das Modulgehäuse mit dem Umformergehäuse durch eine Schraubverbindung verbunden werden kann. Das Modulgehäuse kann beispielsweise einen metallischen Werkstoff, wie Stahl oder Aluminium, oder einen Kunststoff aufweisen. Derzeit wird ein Stahlgehäuse bevorzugt.

Das Sicherheitsmodul ist vorzugsweise anschlussneutral aufgebaut. D.h., der zweite Abschnitt des Signalpfads, der durch das Sicherheitsmodul verläuft, führt zu keiner Veränderung des übertragenen Signals, solange der Leckdetektor kein Leck signalisiert. Das Sicherheitsmodul weist am Ende des zweiten Signalpfadabschnitts Anschlussmittel zum Anschluss einer Übertragungsleitung auf, die durch die zweite Modulöffnung zugänglich sind, wobei die Anschlussmittel vorzugsweise den Anschlussmitteln entsprechen die im Umformergehäuse zum Anschluss der Übertragungsleitung und oder Versorgungsleitung vorgesehen sind, wenn kein Sicherheitsmodul zwischengeschaltet ist. D.h., der Einsatz des erfindungsgemäßen Sicherheitsmoduls erfordert vorzugsweise keine Anpassungen hinsichtlich der Anschlüsse zur Datenübertragung. Die Datenübertragung und Versorgung kann nach beliebigen Protokollen der Prozessmesstechnik erfolgen, beispielsweise durch eine Regelung des Speisestroms (4 ... 20 mA), nach dem Profibus-Standard oder dem Foundation Fieldbus Standard.

Gleichermaßen kann das Sicherheitsmodul hinsichtlich der mechanischen Anschlüsse neutral sein. D.h., es kann auf seiner dem Umformergehäuse zugewandten Seite die mechanischen Anschlusskomponenten der Übertragungsleitung und/oder die mechanischen Anschlusskomponenten einer ggf. vorgesehenen Verrohrung aufweisen, mit denen ohne Einsatz des Sicherheitsmoduls die Übertragungsleitung und/oder die Verrohrung an dem Umformergehäuse befestigt würden, und es kann auf der dem Kontrollraum zugewandten Seite die mechanischen Anschlusskomponenten des Umformergehäuses aufweisen, an denen gewöhnlich die Übertragungsleitung und/oder deren Verrohrung befestigt werden.

Der Leckdetektor ist vorzugsweise so beschaffen, dass er bei der Detektion eines Ausfalls der ersten Dichtung den Anforderungen des Abschnitts 6.3.4 des ANSI/ ISA-12.27.01-2003 genügt.

Der Leckdetektor kann ein beliebiger Sensor sein, der das Eindringen eines kontaminierenden Mediums in den überwachten Abschnitt des Kontaminationspfads oder eine andere Auswirkung des Ausfalls der ersten Dichtung registrieren kann. Hierbei kann es sich beispielsweise, um einen Leitfähigkeitssensor, einen kapazitiven Sensor, einen Temperatursensor, einen Gassensor, einen elektrochemischen Sensor, einen amperometrischen Sensor, einen potentiometrischen Sensor, einen Sensor nach dem Resonanzprinzip, einen Füllstandssensor, einen Durchflusssensor, oder einen einen Drucksensor bzw. einen Druckschalter handeln. Die Leckdetektoren können also je nach Messprinzip entweder unmittelbar das aufgrund eines Lecks eindringende Medium oder einen aufgrund des Lecks auftretenden anderen Effekt wie eine Veränderung von Druck oder Temperatur nachweisen.

Für bestimmte Messumformer mit begrenzter Versorgungsenergie, beispielsweise für Zweidrahtgeräte mit einem Speisestrom von 4 ... 20 mA, werden derzeit Leckdetektoren mit einer minimalen Leistungsaufnahme bevorzugt. Besonders bevorzugt sind für diese Anwendungsfälle Leckdetektoren ohne jegliche Leistungsaufnahme. Dieses Kriterium wird beispielsweise von Druckschaltern eingehalten.

Ein Druckschalter kann so angeordnet sein, dass er beispielsweise den Signalpfad Signalausgang eines 4 ... 20 mA Zweidraht-Gerätes unterbricht oder kurzschließt, was einen Signalstrom von 0 bzw. 22 mA bewirkt. Beide Signalströme sind grundsätzlich geeignet, als Fehlermeldung gedeutet zu werden, und werden grundsätzlich so interpretiert.

Der Schaltpunkt für den Druckschalter ist so zu wählen, dass er bei den für das Sicherheitsmodul zugelassenen Prozessdruckbereichen mit Sicherheit bei dem Ausfall der ersten Dichtung eine Fehlermeldung erzeugt, aber falsche Fehlersignale vermeidet. Der Schaltpunkt sollte also außerhalb des Schwankungsbereichs des normalen Umgebungsdrucks am Einsatzort des Sensors bzw. außerhalb des Schwankungsberichs des Drucks im Umformergehäuse aufgrund von Temperaturschwankungen liegen. Ein geeigneter Schaltpunkt kann beispielsweise bei einem Absolutdruck von 1,3 bar 1,5 bar, oder 2 bar und/oder Überdruck gegenüber des Umgebungsdruck 0,3 bar 0,5 bar, oder 1,0 bar liegen. Um möglichst wenige Durchbrüche in dem Modulgehäuse vorzusehen werden derzeit Absolutdruckschalter und Absolutdrucksensoren als Leckdetektoren bevorzugt, da diese keinen Referenzluftkanal benötigen. Bei Messumformergehäusen mit Belüftungsöffnungen, die mit dem Druckschalter kommunizieren, kann der Schaltpunkt wesentlich niedriger liegen, beispielsweise bei einem Absolutdruck von 1,2 bar und/oder einem Überdruck gegenüber des Umgebungsdruck 0,1 bar oder 0,2 bar.

Anstelle eines einfachen Kurzschluss-Signals, oder einer einfachen Unterbrechung des Signals kann der Druckschalter auch so angeschlossen sein, dass bei Überschreitung eines Druckgrenzwertes die Stromversorgung zum Messumformer unterbrochen und stattdessen eine Alarmierungsschaltung von der Stromversorgung gespeist wird, wobei die Alarmierungsschaltung in dem Gehäuse des Sicherheitsmoduls angeordnet ist und ein Alarmsignal über den Signalpfad ausgibt. Die Alarmierungsschaltung kann beispielsweise eine astabile Kippstufe umfassen, welche mit einer Schaltfrequenz zwischen zwei Signalpegeln wechselt, wobei die Periode der Schaltvorgänge erheblich geringer ist, als die Zeitskala der typischen Veränderungen der gemessenen Prozessgröße im bestimmungsgemäßen Messbetrieb. Die Schaltfrequenz kann beispielsweise zwischen 10 Hz und 10 kHz variieren. Auf diese Weise generiert das Sicherheitsmodul ein Fehlersignal, welches von dem üblichen Kurzschlusssignal oder einem Nullsignal der unterbrochenen Leitung unterscheidbar ist und somit spezifischer auf den aufgetretenen Ausfall der ersten Dichtung hinweist. An geeigneter Stelle, beispielsweise in einer Warte oder einem Leitstand ist entsprechend ein Detektor vorzusehen, welcher das Alarmsignal detektiert, und einen Alarm auslöst. Auch die beschriebene Alarmierungsschaltung mit der astabilen Kippstufe hat im normalen Messbetrieb keine Leistungsaufnahme, so dass sie für die Verwendung in einem Zweidraht-Messumformer geeignet ist.

Insoweit als der Kontaminationspfad im Sicherheitsmodul parallel zum Signalpfad verläuft, und die zweite Dichtung den Kontaminationspfad hermetisch dicht unterbricht, kann das Sicherheitsmodul auch die Anforderungen für den Einsatz in explosionsgefährdeten Bereichen erfüllen. Für solche Ausgestaltungen des Sicherheitsmoduls ist es erforderlich, dass nach der zweiten Dichtung keine Schaltelemente mehr vorgesehen sind, oder dass noch eine weitere Dichtung oder Flammendurchschlagsperre vorgesehen ist, falls der nach der zweiten Dichtung noch Schaltelemente angeordnet werden. In einer weiteren Ausgestaltung des Sicherheitsmoduls für explosionsgefährdete Anwendungen erfüllt dieses die Anforderungen an eine Flammensperre bzw. Zündsperre im Sinne eines "conduit seal", demnach erübrigt sich dann der Einsatz einer nachgeordneten Zündsperre in einem verrohrten Signalpfad. Das gleiche gilt entsprechend für ggf. abschnittsweise parallel zum Signalpfad angeordnete sekundäre Schaltelemente deren Sekundärsignal, unter Umgehung der zweiten Dichtung dem Signalpfad zwischen der zweiten Dichtung und einer übergeordneten Einheit zugeführt werden sollen; auch in diesem Fall ist für den Einsatz in explosionsgefährdeten Bereichen eine Flammendurchschlagsperre oder eine hermetische Dichtung zwischen den sekundären Schaltelementen und dem Signalpfad zwischen der zweiten Dichtung und einer übergeordneten Einheit vorzusehen.

Das Sicherheitsmodul der zuvor beschriebenen Messanordnung ist insbesondere geeignet, um herkömmliche Messumformer nachzurüsten.

Die Erfindung wird nun anhand eines Ausführungsbeispiels in den Figuren gezeigten Ausführungsbeispiels näher erläutert. Es zeigt:
Fig. 1 einen Längsschnitt durch eine erfindungsgemäße Messanordnung;
Fig. 2 eine teilweise geschnittene räumliche Darstellung eines erfindungsgemäßen Sicherheitsmoduls;
Fig. 3 eine Explosionszeichnung des Sicherheitsmoduls aus Fig. 2; und
Fig. 4 einen Längsschnitt durch das Sicherheitsmodul aus Fign. 2 und 3.

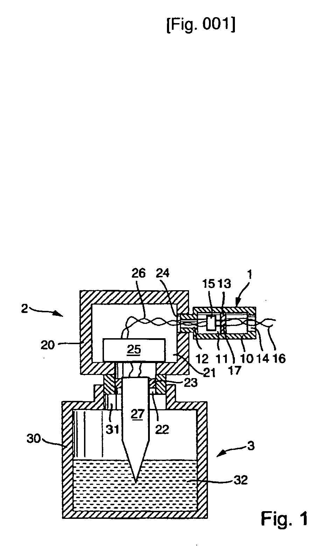

Der Aufbau der erfindungsgemäßen Messanordnung wird anhand von Fig. 1 verdeutlicht. Die Messanordnung umfasst einen Messumformer zum erfassen einer Prozessgröße, beispielsweise einer Temperatur. Der Messumformer 2 weist ein Gehäuse 20 auf, welches in seinem inneren eine Kammer 21 definiert, die über eine erste Öffnung 22 und eine zweite Öffnung 24 mit der Umgebung des Gehäuses verbunden ist. In der ersten Öffnung 22 ist ein Temperatursensor 27 angeordnet, welcher die Temperatur eines Mediums 32 in einem Behälter 30 einer Prozessanlage 3 erfasst. Der Messumformer 2 ist hierzu in der Behälteröffnung 31 des Behälters montiert.

Zwischen dem Temperatursensor 27 und der zylindrischen Wand der ersten Öffnung 22 des Gehäuses ist eine erste Dichtung 23 angeordnet, welche die Kammer 21 gegen das Eindringen des Mediums durch die erste Öffnung 22 abdichtet. Insoweit wird durch die erste Dichtung 22 ein Kontaminationspfadabschnitt aus dem Behälter 30 der Prozessanlage 3 in die Kammer 21 des Messumformers 2 unterbrochen.

In der Kammer 21 ist eine elektronische Schaltung 25 angeordnet, welche anhand eines Primärsignals des Temperatursensors 27 ein Ausgangssignal generiert, das den gemessenen Temperaturwert repräsentiert, beispielsweise durch Regelung des Speisestroms zwischen 4 und 20 mA. Das Ausgangssignal wird über einen Signalpfadabschnitt, der hier eine Zweidrahtleitung 26 umfasst, aus dem Gehäuse 20 geführt.

Bei Messanordnungen nach dem Stand der Technik könnte die Zweitdrahtleitung durch eine Verrohrung in eine Warte geleitet sein. Wenn bei einem solchen Aufbau nun die erste Dichtung 23 ausfällt kann ggf. das Prozessmedium durch die Kammer 21 und die Verrohrung bis in die Warte gelangen. Dies wird durch das Sicherheitsmodul 1 vermieden. Welches erstens den Kontaminationspfad mit einer weiteren Dichtung unterbricht und zweitens den Ausfall der ersten Dichtung erkennt und signalisiert. D.h., es wird verhindert, dass nach dem Versagen der ersten Dichtung 23 das Medium unbemerkt an die zweite Dichtung und nach deren Ausfall letztlich in die Warte gelangen kann.

Das Sicherheitsmodul 1 umfasst ein Modulgehäuse 10 welches eine Modulkammer 11 definiert, die durch eine Trennwand 13 geteilt ist, in welcher elektrische Durchführungen 17 druckdicht angeordnet sind. Die Trennwand 13 mit den abgedichteten Durchführungen und ggf. vorgesehenen Dichtungen zwischen der Trennwand und dem Modulgehäuse dient als zweite Dichtung im Sinne der Erfindung. Die Trennwand, die Durchführungen und das Modulgehäuse sind vorzugsweise so dimensioniert, dass sie dem Berstdruck des Umformergehäuses 20 standhalten.

Durch das Modulgehäuse 10 erstreckt sich der Signalpfad, wobei durch eine erste Modulgehäuseöffnung 12 die Zweidrahtleitung vom Messumformer 2 in das Modulgehäuse 10 geführt wird, und über die elektrischen Durchführungen 17 mit der Speiseleitung 16 verbunden ist, die durch eine zweite Modulgehäuseöffnung 14 in das Modulgehäuse 10 geführt wird. Im der Modulkammer 11 des Modulgehäuses 10 ist weiterhin ein Druckschalter 15 angeordnet, welcher die Zweidrahtleitung kurzschließt, wenn der Druck in der Modulkammer über einen Grenzwert ansteigt. Durch den Kurzschluss übersteigt der Signalstrom den zur Übertragung von Messwerten vorgesehenen Bereich (4 ... 20 mA) und signalisiert somit einen Fehler.

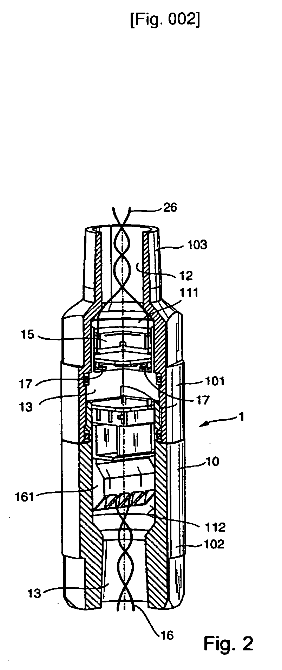

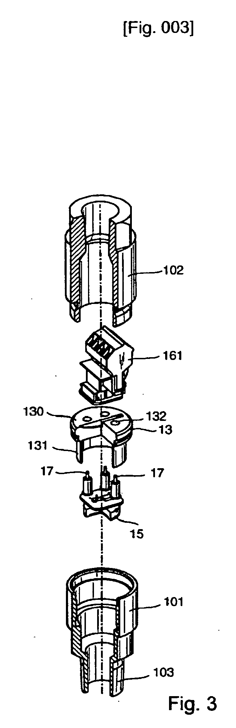

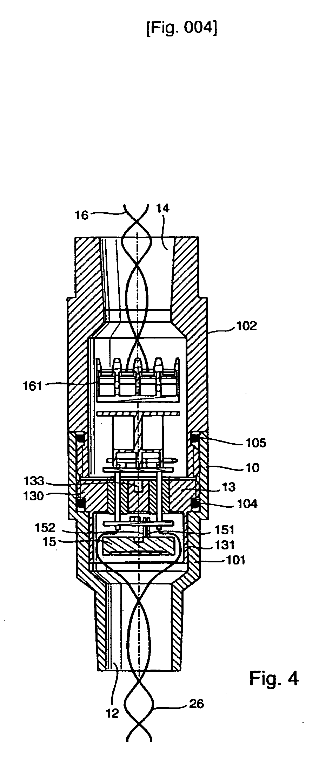

Weitere Einzelheiten zur derzeit bevorzugten Ausführungsform des Sicherheitsmoduls werden nun anhand der Fign.2 - 4 erläutert.

Das Modulgehäuse 10 hat zumindest abschnittsweise einen zylindrischen oder kegelstumpfförmigen Aufbau. Es weist ein druckbeständiges Material, vorzugsweise einen metallischen Werkstoff wie Edelstahl auf. Es umfasst einen ersten Gehäuseabschnitt 101 und einen zweiten Gehäuseabschnitt 102 welche miteinander druckdicht verschraubt werden können. Zur Abdichtung ist zwischen den Gehäuseabschnitten ein Dichtring 105 vorgesehen. In dem ersten Gehäuseabschnitt 101 ist die Trennwand 13 angeordnet. Die Trennwand 13 umfasst eine Wandplatte 130, in der durchgehende axiale Bohrungen 132 für die druckfesten und gasdichten elektrischen Durchführungen 17 vorgesehen sind. Von der Wandplatte 130 erstreckt sich in axialer Richtung eine zylindrische Hülse 131. Die Trennwand 13 wird mit der Hülse 131 voraus in dem erste Gehäuseabschnitt 101 montiert, wobei zwischen der einen Mantelfläche der zylindrischen Hülse 131 und der Wand des Gehäuseabschnitts 101 ein Spalt gebildet wird, der so bemessen ist, dass er als Flammendurchschlagsperre dient. Die Trennwand 13 kann beispielsweise in den ersten Gehäuseabschnitt 101 eingeschraubt oder nur eingesetzt werden, wobei die axiale Sicherung dann beispielsweise durch Schweißpunkte oder durch eine Abstützung gegen den aufgeschraubten zweiten Gehäuseabschnitt 102 erfolgen kann. Zwischen der Mantelfläche der Wandplatte 130 und der Innenwand des ersten Gehäuseabschnitts 101 ist ein Dichtring 104 vorgesehen, der an dafür vorgesehenen Anschlagflächen radial und/oder axial eingespannt ist.

Die bei diesem Beispiel vorgesehenen vier elektrischen Durchführungen 17, die bei der Montage des Sicherheitsmodul in den Bohrungen 132 durch die Wandplatte 130 druckdicht befestigt werden, sind an einer Platine angeordnet, welche den Druckschalter 15 trägt. Die Anschlüsse des Druckschalters sind solchermaßen mit den elektrischen Durchführungen verbunden, dass bei überschreiten eines Druckgrenzwertes, die Durchführungen 17, über welche der Signalstrom geführt wird, kurzgeschlossen werden. Auf der dem Druckschalter abgewandten Seite der Wandplatte 130 ist ein Klemmenblock 161 an die elektrischen Durchführungen 17 angeschlossen, der Anschlussbuchsen für vier Adern aufweist, so dass das neben Zweidrahtleitungen 16, auch Vierdrahtleitungen angeschlossen werden können. Soweit erforderlich, können Widerstände zur Strombegrenzung vorgesehen sein.

In einer alternativen Ausgestaltung ist ein Steckverbinder vorgesehen, der den üblichen Anschlusstechnik bei Profibus PA oder Foundation Fielbus Anschlüssen genügt.

## Patentansprüche

1. Messanordnung, umfassend : einen Messumformer (2) mit
einem Sensor zum Erfassen einer Messgröße eines Mediums, wobei der Sensor ein von der Messgröße abhängiges Primärsignal ausgibt;
einem Umformergehäuse (20), welches in seinem Inneren mindestens eine Kammer (21) definiert, und welches eine medienseitige erste Öffnung (22) und eine zweite Öffnung (24) aufweist, wobei sich von der ersten Öffnung zur zweiten Öffnung ein erster Abschnitt eines Kontaminationspfads erstreckt, der durch die mindestens eine Kammer verläuft;
einer ersten Dichtung (23), welche den ersten Abschnitt des Kontaminationspfads unterbricht;
einer elektronischen Schaltung (25), welche in der mindestens einen Kammer angeordnet ist, wobei die Schaltung das Primärsignal des Sensors verarbeitet und ein Ausgangssignal erzeugt, welches über einen ersten Abschnitt eines Signalpfads ausgegeben wird, der durch die zweite Öffnung verläuft;
**dadurch gekennzeichnet, dass**
die Messanordnung weiterhin ein Sicherheitsmodul (1) aufweist, mit
einem Modulgehäuse (10), welches in seinem Inneren mindestens eine Modulkammer (11) definiert, und welches eine umformerseitige erste Modulöffnung (12) und eine zweite Modulöffnung (14) aufweist, wobei sich von der ersten Modulöffnung ein zweiter Abschnitt des Kontaminationspfads zumindest bis in die mindestens eine Modulkammer erstreckt;
mindestens einer zweiten Dichtung (13), welche den zweiten Abschnitt des Kontaminationspfads unterbricht; und
einem zweiten Abschnitt des Signalpfads; wobei das Sicherheitsmodul derart mit dem Messumformer verbindbar ist, dass der zweite Abschnitt des Kontaminationspfads an den ersten Abschnitt des Kontaminationspfads anschließt; und
der zweite Abschnitt des Signalpfads an den ersten Abschnitt des Signalpfads anschließt, um das Ausgangssignal vom ersten Abschnitt des Signalpfads weiter zu leiten;
und einen Leckdetektor (15), welcher einen Teil des Kontaminationspfads überwacht der zwischen der ersten Dichtung und der zweiten Dichtung angeordnet ist, um den Ausfall der ersten Dichtung zu erkennen und zu signalisieren,
wobei der Leckdetektor bei Auftreten eines Lecks den Signalpegel des Ausgangssignals verändert.

2. Messanordnung nach Anspruch 1 wobei der Leckdetektor einen kapazitiven Sensor, einen Temperatursensor, einen Gassensor, einen elektro- chemischen Sensor, einen amperometrischen Sensor, einen potentiometrischen Sensor, einen Sensor nach dem Resonanzprinzip, einen Füllstandssensor, einen Durchflusssensor, oder einen Drucksensor bzw. einen Druckschalter umfasst.

3. Messanordnung nach einem der Ansprüche 1 bis 2, wobei der Signalpfad eine Speisestmmleitung umfasst, auf welcher der Messwert durch einen Strompegel repräsentiert wird.

4. Messanordnung nach Anspruch 3, wobei der Leckdetektor einen Schalter umfasst, welcher im Falle eines Lecks die Speisestromleitung unterbricht oder kurzschliesst.

5. Messanordnung nach einem der Ansprüche 1 bis 4, wobei der Leckdetektor, eine Alarmierungsschaltung umfasst, welche dem Signalpfad ein Alarmsignal aufprägt, welches einerseits von einem gewöhnlichen Messsignal und andererseits von einem Kurzschlusssignal oder einem unterbrochenen Stromkreis unterscheidbar ist.

6. Messanordnung nach einem der Ansprüche1 bis 5, wobei das Modulgehäuse vorzugsweise druckdicht mit dem Umformergehäuse verbunden ist, und wobei die erste Modulöffnung mit der zweiten Öffnung des Umformergehäuses fluchtend kommuniziert.

7. Messanordnung nach einem der Ansprüche 1 bis 6, wobei das Modulgehäuse einen metallischen Werkstoff, oder einen Kunststoff aufweist

## Claims

1. Measuring arrangement, comprising a transmitter (2) with
a sensor for measuring a measured variable of a medium, wherein the sensor outputs a primary signal that depends on the measured variable:
a transmitter housing (20), which defines, in its interior, at least one chamber (21), and which has a first opening (22) on the medium side and a second opening (24), wherein a first section of a contamination path extends from the first opening to the second opening, said path passing through the at least one chamber;
a first seal (23), which interrupts the first section of the contamination path;
an electronic circuit (25), which is arranged in the at least one chamber, wherein the circuit processes the primary signal of the sensor and generates an output signal which is output via a first section of a signal path that passes through the second opening;
**characterized in that**
the measuring arrangement (10) also has a safety module (1), with
a module housing (10), which defines, in its interior, at least one module chamber (11), and which has a first module opening (12) on the transmitter side and a second module opening (14), wherein a second section of the contamination path extends from the first module opening at least into the at least one module chamber;
at least a second seal (13), which interrupts the second section of the contamination path; and
a second section of the signal path, wherein the safety module can be connected to the transmitter in such a way that the second section of the contamination path meets the first section of the contamination path; and
the second section of the signal path meets the first section of the signal path in order to pass on the output signal from the first section of the signal path;
and a leak detector (15), which monitors a part of the contamination path which is arranged between the first seal and the second seal in order to identify and signal the failure of the first seal,
wherein the leak detector changes the signal level of the output signal if a leak occurs.

2. Measuring arrangement as claimed in Claim 1, wherein the leak detector is a capacitance sensor, a temperature sensor, a gas sensor, an electrochemical sensor, an amperometric sensor, a potentiometric sensor, a sensor according to the resonance principle, a level sensor, a flow sensor or a pressure sensor or pressure switch.

3. Measuring arrangement as claimed in one of the Claims 1 to 2, wherein the signal path comprises a feed current line on which the measured value is represented by a current level.

4. Measuring arrangement as claimed in Claim 3, wherein the leak detector comprises a switch which interrupts or short-circuits the feed current line in the event of a leak.

5. Measuring arrangement as claimed in one of the Claims 1 to 4, wherein the leak detector comprises an alarm circuit which applies an alarm signal to the signal path, said alarm signal being distinguishable on the one hand from a usual measuring signal and on the other hand from a short-circuit signal or an interrupted circuit.

6. Measuring arrangement as claimed in one of the Claims 1 to 5, wherein the module housing is preferably connected to the transmitter housing in a pressure-tight manner, and wherein the first module opening communicates in a flush manner with the second opening of the transmitter housing.

7. Measuring arrangement as claimed in one of the Claims 1 to 6, wherein the module housing features from a metal material or a plastic.

## Revendications

1. Configuration de mesure comprenant un transmetteur (2) avec
un capteur destiné à la détection d'une grandeur mesurée d'un produit, le capteur émettant un signal primaire dépendant de la grandeur mesurée :
un boîtier de transmetteur (20), lequel forme en son intérieur au moins une chambre (21), et lequel présente une première ouverture (22) côté produit et une deuxième ouverture (24), une première section d'une voie de contamination s'étendant de la première ouverture jusqu'à la deuxième ouverture, laquelle voie traverse l'au moins une chambre ;
un premier joint (23), qui interrompt la première section de la voie de contamination ;
un circuit électronique (25), qui est disposé dans l'au moins une chambre, le circuit traitant le signal primaire du capteur et générant un signal de sortie, qui est émis via une première section d'une voie de signal, qui passe à travers la deuxième ouverture ;
**caractérisé**
**en ce que** la configuration de mesure (10) comporte en outre un module de sécurité (1), avec
un boîtier de module (10), qui définit dans son intérieur au moins une chambre de module (11), et qui présente côté transmetteur une première ouverture de module (12) et une deuxième ouverture de module (14), une deuxième section de la voie de contamination s'étendant de la première ouverture de module au minimum jusque dans l'au moins une chambre de module ;
au moins un deuxième joint (13), qui interrompt la deuxième section de la voie de contamination ; et
une deuxième section de la voie de contamination ; le module de sécurité pouvant être relié avec le transmetteur de telle sorte que la deuxième section de la voie de contamination aboute à la première section de la voie de contamination ; et
**en ce que** la deuxième section de la voie de signal aboute à la première partie de la voie de signal, afin de transmettre le signal de sortie provenant de la première section de la voie de signal ;
et un détecteur de fuites (15), qui surveille une partie de la voie de contamination se trouvant entre le premier joint et le deuxième joint, afin d'identifier et de signaler la défaillance du premier joint,
le détecteur de fuites modifiant le niveau du signal de sortie en cas d'apparition d'une fuite.

2. Configuration de mesure selon la revendication 1, pour laquelle le détecteur de fuites comprend un capteur capacitif, un capteur de température, un capteur de gaz, un capteur électrochimique, un capteur ampérométrique, un capteur potentiométrique, un capteur d'après le principe de résonance, un capteur de niveau, un capteur de débit ou un capteur de pression / un pressostat.

3. Configuration de mesure selon l'une des revendications 1 à 2, pour laquelle la voie de signal comprend une ligne de courant d'alimentation, sur laquelle la valeur mesurée est représentée par un niveau de courant.

4. Configuration de mesure selon la revendication 3, pour laquelle le détecteur de fuites comprend un interrupteur qui, en cas de fuite, interrompt ou court-circuite la ligne de courant d'alimentation.

5. Configuration de mesure selon l'une des revendications 1 à 4, pour laquelle le détecteur de fuites comprend un circuit d'alarme, qui applique à la voie de signal un signal d'alarme, lequel peut être distingué, d'une part, d'un signal de mesure usuel et, d'autre part, d'un signal de court-circuit ou d'un circuit interrompu.

6. Configuration de mesure selon l'une des revendications 1 à 5, pour laquelle le boîtier de module est relié de préférence de façon étanche à la pression avec le boîtier de transmetteur, et pour laquelle la première ouverture de module communique de façon affleurante avec la deuxième ouverture de module du boîtier de transmetteur.

7. Configuration de mesure selon l'une des revendications 1 à 6, pour laquelle le boîtier de module est constitué d'un matériau métallique ou d'une matière plastique.
